# EUROPÄISCHE PATENTSCHRIFT

(11) **EP 1 004 380 B1**
(45) Veröffentlichungstag und Bekanntmachung des Hinweises auf die Patenterteilung: **05.03.2003**
(21) Anmeldenummer: 99118127.2
(22) Anmeldetag: 11.09.1999
(51) Int. Cl.: B23C 5/10

(54) **Präzisionsfräser mit Schneidplatten**
Precision milling cutter with cutting inserts
Fraise de précision avec plaquette de coupe

(30) Priorität: 28.11.1998 DE 19855045
(43) Veröffentlichungstag der Anmeldung: 31.05.2000
(73) Patentinhaber: WALTER AG, 72072 Tübingen (DE)
(72) Erfinder: WETLI Markus, CH-5606 DINTIKON (CH); HUBER Rolf, D-72072 TÜBINGEN 3 (DE)
(74) Vertreter: Patentanwälte Rüger, Barthelt & Abel

(56) Entgegenhaltungen:
- EP-A- 0 278 389
- EP-A- 0 711 619
- DE-A- 3 812 150
- US-A- 5 791 832
- US-A- 5 944 456
- US-A- 5 957 629
- PATENT ABSTRACTS OF JAPAN vol. 5, no. 68 (M-067), 8. Mai 1981 (1981-05-08) & JP 56 021711 A (SUMITOMO), 18. Februar 1981 (1981-02-18)

## Beschreibung

Die Erfindung betrifft ein Zerspanungswerkzeug, insbesondere ein Fräswerkzeug für Präzisionsbearbeitungen, das mit lösbar befestigten Schneidplatten bestückt ist.

Präzisionsbearbeitungen mit hohen Genauigkeitsanforderungen für das Werkstück stellen zugleich hohe Genauigkeitsanforderungen an das Werkzeug. Sollen, bspw. komplizierte Geometrien in einem Fräsbearbeitungsschritt herausgebildet werden, werden dazu in der Regel HSS-Fräser verwendet (HSS = Hochleistungsschnellstahl), die eine relativ komplizierte Kontur aufweisen können. Bspw. ist es bei der Herstellung von Turbinenrotoren erforderlich, in einer Rotorwelle hinterschnittene Nuten auszubilden, in die entsprechend geformte Füße von Turbinenschaufeln eingeschoben werden. Die Nuten haben in der Regel ein Tannenbaumprofil und sind mehrfach hinterschnitten. An die Formhaltigkeit der Nuten werden hohe Anforderungen gestellt.

Dazu ist es aus der DE 19611276 C1 bekannt, die gewünschte Nut zunächst ohne Hinterschnitt zu öffnen und anschließend mit einem Wendeschneidplatten bestückten Fräswerkzeug die Hinterschnitte in einen Schruppbearbeitungsvorgang auszubilden. Die gewünschte Präzision wird dann in einem oder mehreren weiteren Arbeitsgängen mittels eines HSS-Schaftfräsers hergestellt. Ein solcher HSS-Schaftfräser hat einen relativ geringen Materialabtrag zu bewältigen. Dennoch kann die Vorschubgeschwindigkeit nicht grenzenlos gesteigert werden. HSS-Fräser sind hinsichtlich ihrer Schnittgeschwindigkeit hartmetallbestückten Fräsern unterlegen.

HSS-Fräser müssen von Zeit zu Zeit nachgeschliffen werden. Dabei darf, insbesondere wenn die Außenkontur des Fräsers die Kontur der zu bearbeitenden Nut festlegt, die Fräserkontur beim Nachschleifen nicht geändert werden. Um dies zu erreichen, sind die Freiflächen in der Regel bogenförmig an die Schneidkante anschließend ausgebildet, d.h. mit einem radialen Hinterschliff versehen. Der Nachschliff des HSS-Fräsers erfolgt dann durch Nachschleifen der Spanfläche ohne Bearbeitung der Freifläche, was nur eine geringe Reduzierung des Durchmessers bewirkt.

Der geringe Freiwinkel macht in den meisten Fällen eine Bearbeitung des Werkstücks im Gleichlauf erforderlich. Dies bedeutet, dass die Vorschubrichtung des Werkstücks im Wesentlichen mit der Bewegungsrichtung der mit dem Werkstück in Eingriff befindlichen Schneidkante übereinstimmt. Die Bearbeitung im Gleichlauf kann im Sinzelfail jedoch zu Mikrorissen oder Rauigkeiten in der bearbeiteten Oberfläche führen, was insbesondere bei hochbeanspruchten Bauteilen problematisch sein kann.

Davon ausgehend ist es Aufgabe der Erfindung, ein Zerspanungswerkzeug zu schaffen, mit dem sich Präzisionsbearbeitungen bei großer Zerspanungsleistung wirtschaftlich bewerkstelligen lassen.

Diese Aufgabe löst das Zerspanungswerkzeug mit den Merkmalen des Patentanspruchs 1. Außerdem wird die Lösung der Aufgabe durch Anwendung des Verfahrens nach Anspruch 18 ermöglicht.

Das erfindungsgemäße Zerspanungswerkzeug weist mehrere Plattensitze auf, die zur Aufnahme von entsprechend ausgebildeten Schneidplatten eingerichtet sind. Jedem Plattensitz ist wenigstens eine Schneidplatte zugeordnet, die zu wenigstens einem Schneidplattensatz gehört. Vorzugsweise sind jedem Werkzeugkörper jedoch mehrere Schneidplattensätze zugeordnet, wobei jeder Schneidplattensatz für jeden Plattensitz jeweils genau eine Schneidplatte enthält. Die feste Zuordnung von Plattensitz und Schneidplatte wird, sobald sie festgelegt ist, dauernd beibehalten. Dadurch kann erreicht werden, dass an dem Plattensitz und an der Schneidplatte vorhandene Maßtoleranzen keinen Einfluss auf die Präzision der Form und Position der Schneidkante einer Schneidplatte in Bezug auf die Drehachse des Zerspanungswerkzeugs haben. Die Schneidplatte kann von dem Plattensitz wiederholt gelöst und an diesem befestigt werden, ohne dass dadurch eine Maßtoleranz entsteht. Der Werkzeugköper dient sowohl als Werkzeuggrundkörper im eigentlichen Sinne als auch als Schneidplattenhalter bei der Feinbearbeitung der Schneidplatten. Die Genauigkeit der Schneidkanten kann dadurch wesentlich größer sein als die Genauigkeit der Plattensitze.

Um die gewünschte Zuordnung zwischen Schneidplatte und Plattensitz und die Einhaltung der Zuordnung auf Dauer sicherzustellen, sind die Schneidplatten vorzugsweise mit einer individuellen Markierung versehen, die den Plattensitz bezeichnet, dem sie zugeordnet sind. Die Markierung kann eine Gravur, eine Farbmarkierung oder eine spezielle Formgebung sein oder eine andere dauerhafte Beschriftung sein, die die nachfolgenden Bearbeitungen übersteht. Letzteres kann erreicht werden, indem die Plattensitze jeweils eigenständige Formen aufweisen. Dies kann jedoch mit einem fertigungstechnischen Mehraufwand verbunden sein. Aus fertigungstechnischen Gründen und aus Gründen der einheitlichen, möglichst optimalen Abstützung der Schneidplatten an dem Werkzeugkörper, wird bevorzugt, einheitliche Plattensitze zu verwenden. Um ein Vertauschen der Schneidplatten zu verhindern, sind diese mit Markierungen versehen, die den jeweiligen Plattensitz bezeichnen. Zusätzlich kann eine Markierung vorgesehen sein, die den Werkzeugkörper bezeichnet. Dies verhindert, dass die Schneidplatte fälschlich an einem anderen Toleranzen aufweisenden Werkzeugkörper befestigt wird.

Durch die individuelle Plattenzuordnung zu den Plattensitzen und Werkzeugkörpern kann mit dem schneidplattenbestückten Fräswerkzeug eine Werkzeuggenauigkeit von etwa ±0,01 mm erreicht werden. Das schneidplattenbestückte Werkzeug ermöglicht dadurch Bearbeitungsgenauigkeiten, die bislang HSS-Werkzeugen vorbehalten waren. Zugleich wird jedoch eine sehr hohe Zerspanungsleistung erreicht.

Der wirtschaftliche Einsatz solcher Werkzeuge wird weiter dadurch verbessert, dass kein Nachschleifen erforderlich ist. Sind die Schneidkanten verschlissen, wird der Schneidplattensatz von dem Werkzeugkörper entfernt und der Werkzeugkörper wird mit einem neuen, für ihn vorgesehenen, individuell geschliffenen Schneidplattensatz bestückt. Die präzise Form des Zerspanungswerkzeugs ist dadurch sofort und ohne komplizierte Einstellmaßnahmen hergestellt und es kann weiter eingesetzt werden.

Die Schneidkanten der Schneidplatten ergänzen sich zu wenigstens einer vollständigen Schneide, wobei insbesondere in Zahnspitzenbereichen Überlappungsbereiche vorgesehen sein können, in denen die Schneidenzahl z>1 ist. Auf diese Weise kann der Schneidkantenverschleiß von schräg und parallel zu der Drehachse angeordneten Schneidkanten aneinander angeglichen werden.

Zusätzlich zu den Schneidkanten können die Plattensitze mit Markierungen versehen sein, die eine einfache Zuordnung der Schneidplattenmarkierungen ermöglichen. Die Markierungen können als Symbole, als Ziffern oder als Buchstabencode vorgesehen werden.

Die Schneidplatten sind vorzugsweise mit einem positiven Freiwinkel versehen. Der Freiwinkel wird durch einen Fasenanschliff im Anschluss an die Schneidkante erhalten. Die Freifläche liegt auf einer Geraden, die sich von der Schneidkante weg erstreckt. Dadurch ist der Freiwinkel auch unmittelbar im Anschluss an die Schneidkante von Null verschieden. Dies gestattet die Fräsbearbeitung mit positivem Spanwinkel im Gegenlauf, d.h. die Schneidkante bewegt sich infolge der Drehung des Fräswerkzeugs an dem Werkstück gegen die Vorschubrichtung des Werkzeugs. Dies ergibt eine gute Oberflächenqualität auch bei großen Schnittgeschwindigkeiten. An dem Werkzeugkörper sind die Schneidplatten vorzugsweise mit einem Axialspanwinkel von 0° eingebaut, was entlang jeder Schneidkante konstante Schnittverhältnisse zur Folge hat. Gegeneinander sind die Schneidplatten vorzugsweise spiralig versetzt (auf einer Schraubenlinie angeordnet), um die Schnittkräfte zu vergleichmäßigen. Dies hat außerdem Vorteile hinsichtlich der Späneabfuhr. Auch entsteht eine relativ gleichmäßige und in ihrem Spitzenwert geringere radial auf das Zerspanungswerkzeug einwirkende Kraft. Elastischen Deformationen und somit Bearbeitungsungenauigkeiten sind minimiert.

Die Schneidplatten werden, nachdem sie bspw. in einem Sinterverfahren hergestellt worden sind, vor und unmittelbar nach dem ersten Einbau in einen Werkzeugkörper mit der entsprechenden Markierung versehen, die den jeweiligen Plattensitz und Werkzeugkörper kennzeichnet. In eingebautem Zustand werden die Schneidplatten dann in einem Präzisionsschleifverfahren geschliffen, so dass die Außenkontur oder die Schneidkantengeometrie des Fräswerkzeugs präzise festgelegt wird. Ist dieser Vorgang beendet, werden die Schneidplatten ausgebaut und einer weiteren Bearbeitung zugeführt. Dies kann eine gezielte Verrundung der Schneidkanten und eine Oberflächenbehandlung, wie bspw. die Beschichtung mit Titannitrit (TiN), Titancarbid (TiC), Titancarbonitrid (TiCN), Titanaluminiumnitrid (TiAlN) oder anderen Hartstoffen, eine PVD-Beschichtung o.ä. sein. Dabei wird die Markierung der Wendeschneidplatte nicht zerstört und bleibt lesbar. Somit ist ein Schneidplattensatz fertig. Weitere Schneidplattensätze können in gleicher Weise für denselben werkzeugkörper hergestellt werden. Die Schneidplattensätze sind dem Werkzeugkörper zugeordnet und nur für diesen vorgesehen.

Die Anzahl der auf diese Weise für den speziellen Werkzeugkörper herstellbaren Schneidplattensätze ist nicht limitiert. Der Werkzeugkörper wird dann mit den entsprechend sortierten und verpackten Schneidplattensätzen ausgeliefert. Vor Ort kann der Anwender den Werkzeugkörper mit Schneidplatten eines Satzes bestücken und diese bedarfsweise, bspw. bei Verschleiß, gegen Schneidplatten eines anderen Schneidplattensatzes austauschen. In der Regel wird dabei ein ganzer Schneidplattensatz getauscht. Bei geringen Genauigkeitsanforderungen ist es jedoch auch möglich, einzelne Schneidplatten zu tauschen. Dies ermöglicht es, für besonders belastete Schneidplatten Zusatzexemplare bereitzustellen.

Weitere vorteilhafte Einzelheiten von Ausführungsformen der Erfindung sind Gegenstand von Unteransprüchen, der Zeichnung und/oder der Beschreibung.

In der Zeichnung ist ein Ausführungsbeispiel der Erfindung veranschaulicht. Es zeigen:
Fig. einen mit Schneidplatten bestückten Werkzeugkörper, in perspektivischer Darstellung,
Fig. 2 das Werkzeug nach Figur 1, in einer schematisierten Seitenansicht,
Fig. 3 das Zerspanungswerkzeug nach Figur 1, in perspektivischer Darstellung, aus einer anderen Richtung gesehen,
Fig. 4 eine abgewandelte Ausführungsform des Zerspanungswerkzeugs zur Präzisionsbearbeitung mit auswechselbaren Schneidplatten, in perspektivischer Darstellung, und
Fig. 5 einen Plattensitz und eine von diesem getrennte Schneidplatte in ausschnittsweiser und schematisierter Darstellung, in einem anderen Maßstab.

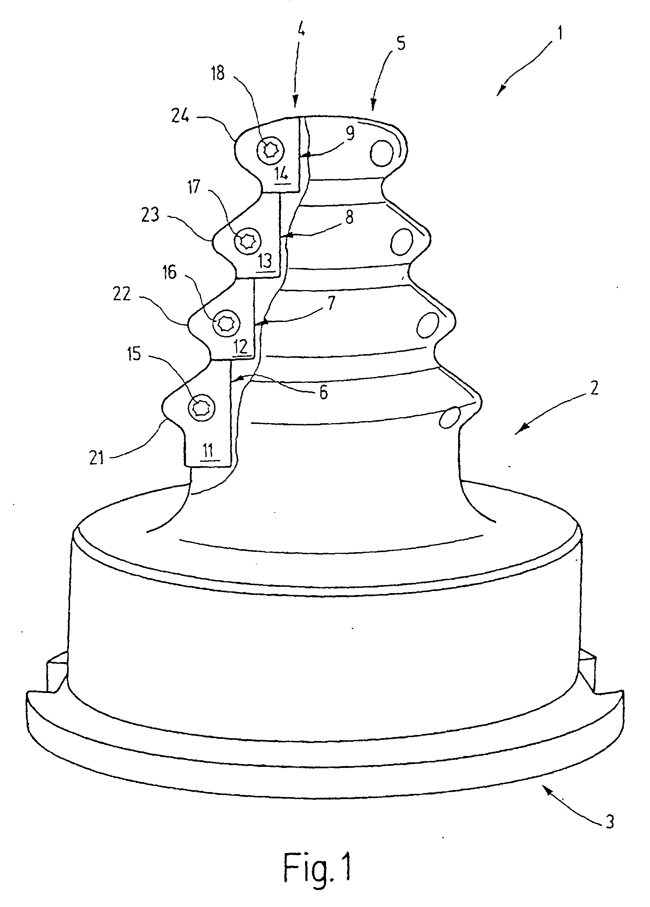

In Figur 1 ist ein Profilfräser 1 veranschaulicht, wie er bspw. zur Bearbeitung der Profilnut in einem Turbinenrotor für den Fuß einer Turbinenschaufel verwendbar ist. Ein solcher Turbinenrotor ist bspw. der der DE 19611276 C1 zu entnehmen. Der Profilfräser 1 weist einen Werkzeugkörper 2 auf, der an einem Ende 3 mit einer Aufnahme für eine Arbeitsspindel versehen ist. An seinem gegenüberliegenden Ende weist der Werkzeugkörper 2 ein etwa der zu bearbeitenden Nut entsprechendes Profil auf. In Längsrichtung sind zwei Spannuten 4, 5 ausgebildet, in denen Plattensitze 6, 7, 8, 9 ausgebildet sind. An den Plattensitzen sind Schneidplatten 11, 12, 13, 14 gehalten. Die Schneidplatten 11, 12, 13, 14 sind jeweils mit einer zentralen Befestigungsschraube 15, 16, 17, 18 festgeklemmt und gegen den Plattensitz 6, 7, 8, 9 gepresst.

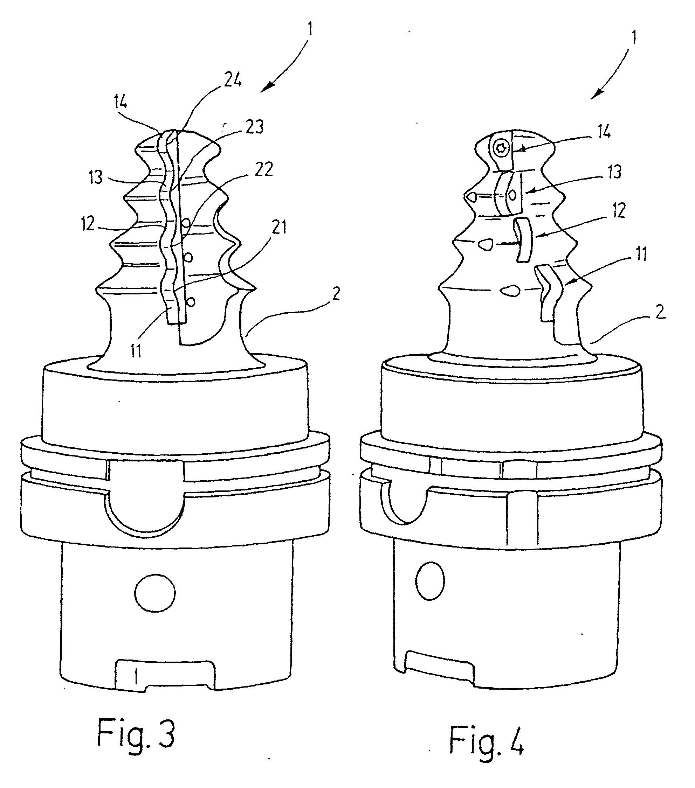

Jede Schneidplatte 11, 12, 13, 14 weist jeweils wenigstens eine Schneidkante 21, 22, 23, 24 auf, die die Außenkontur des Fräswerkzeugs bestimmt. Die Schneidplatten 11 bis 14 sind, wie sich insbesondere aus Figur 3 ergibt, z.B. auf einer Geraden angeordnet. Die Schneidkanten 21 bis 24 ergänzen sich somit zu einer einzigen durchgehenden Schneidkante. Entsprechend schließen die Spanflächen und die Freiflächen der Schneidplatten 11, 12, 13, 14 absatzlos aneinander an. Die Freiflächen sind so geschliffen, dass ein positiver Freiwinkel vorhanden ist. Der Radialspanwinkel ist vorzugsweise positiv eingestellt und der Axialspanwinkel ist vorzugsweise Null.

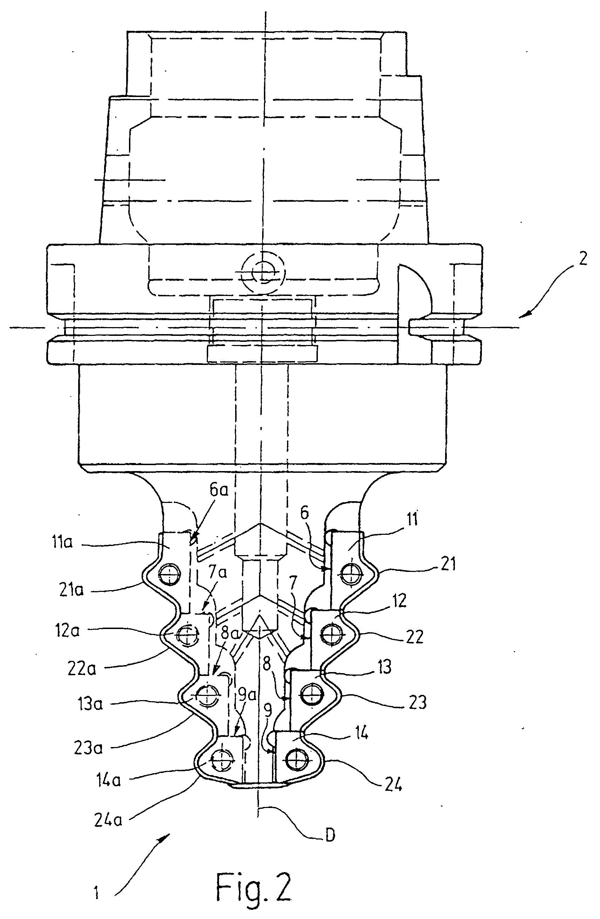

Der Anschluss der Schneidkanten 21 bis 24 aneinander ist der Figur 2 entnehmbar. Außerdem wird ersichtlich, dass die Schneidplatten 11, 12, 13, 14 im gleichen Abstand zu der Drehachse D des Werkzeugkörpers 2 angeordnet sind, wie entsprechende, bezüglich der Drehachse D gegenüberliegend angeordnete Schneidplatten 11a, 12a, 13a, 14a, deren Schneidkanten 21a, 22a, 23a, 24a sich ebenfalls zu einer vollständigen durchgehenden Schneidkante ergänzen. Dieser Profilfräser 1 hat deshalb die Schneidenzahl z=2. Es ist jedoch auch möglich, die Schneidkanten 21, 22, 23, 24 etwas gegen die Schneidkanten 21a, 22a, 23a, 24a zu versetzen, so dass nur jeweils Teilabschnitte jeder Schneidkante aktiv werden. Bspw. können die Schneidkanten 21, 22, 23, 24 mit ihrem jeweils in Figur 2 oberen Abschnitt und ihrer Zahnspitze aktiv sein, während die Schneidkanten 21a, 22a, 23a, 24a mit ihrem jeweiligen unteren Bereich und ihrer Zahnspitze aktiv sind. Auf diese Weise ist die Schneidenzahl z an den Zahnspitze gleich 2, während sie ansonsten 1 ist. Jedoch wird bevorzugt, beide durch die Aneinanderreihung der einzelnen Schneidkanten 21, 22, 23, 24; 21a, 22a, 23a, 24a erzeugten Schneiden genau deckungsgleich auszuführen.

Zwischen in Axialrichtung benachbarten Schneidplatten ist jeweils eine Fuge oder auch eine kleinere Lücke ausgebildet. Dies gilt sowohl für die Schneidplatten 11 bis 14 als auch für die Schneidplatten 11a bis 14a. Die Fugen oder Lücken der von den Schneiplatten 11 bis 14 gebildeten Reihe sind gegen die Fugen und Lücken der von den Schneidplatten 11a bis 14a gebildeten Reihe in Axialrichtung versetzt. Die Schneidplatte 11 ist abweichend von der Schneidplatte 11a ausgebildet. Gleiches gilt für die anderen sich in Umfangsrichtung jeweils überlappenden Schneiplatten 12, 12a; 13, 13a, 14, 14a.

Dies gilt auch für den Profilfräser 1 nach Figur 4, bei dem die Schneidplatten 11, 12, 13, 14 in Umfangsrichtung etwas gegeneinander versetzt sind. Die Schneidplatten 11, 12, 13, 14 sind jedoch mit jeweils gleichem Radialspanwinkel eingebaut, so dass die Schnittverhältnisse übereinstimmen. Sie kommen jedoch nacheinander mit dem Werkstück in Eingriff, so dass der Werkzeugkörper jeweils nur das Antriebsdrehmoment für eine Schneidplatte übertragen muss. Außerdem entstehen günstigere Verhältnisse hinsichtlich der Spaneabfuhr, weil diese schneidplattenweise nacheinander anfallen.

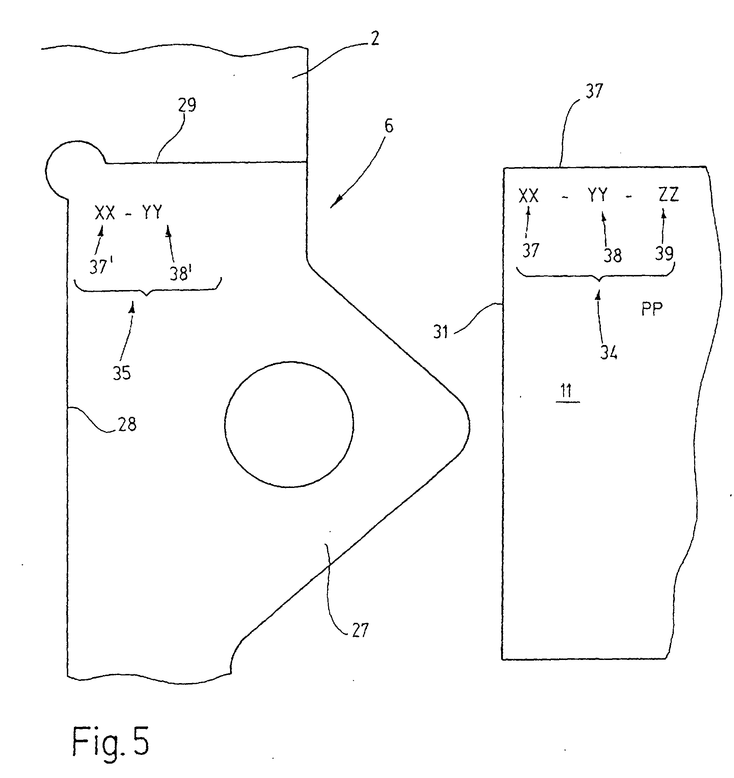

Bei allen vorgestellten Profilfräsern 1 ist ein Plattensitz nach Figur 5 vorgesehen. Der Plattensitz weist eine plane Auflagefläche 27 auf, die etwa der Kontur der jeweiligen Schneidplatte entspricht, so dass diese nahezu auf ihrer gesamten Rückseite (Grundfläche) abgestützt ist. An die Auflagefläche 27 schließen sich rechtwinklig zueinander und zu der Grundfläche 27 stehende Anlageflächen 28, 29 an, der entsprechende Seitenflächen 31, 32 der Schneidplatte 11, 12, 13 oder 14 zugeordnet sind. In Figur 5 ist die Schneidplatte 11 stellvertretend für alle anderen Schneidplatten veranschaulicht. Die rechtwinklige Ausrichtung der Anlageflächen 28, 29 zu der Auflagefläche 27 ergibt eine sichere und wiederholgenaue Lagerung der Schneidplatte 11. Die exakte Position der Schneidplatte 11 ist dabei von Toleranzen des Plattensitzes 6 und der Schneidplatte 11 abhängig.

Um den Einfluss dieser Toleranzen auf die Genauigkeit der Positionierung der Schneidkante 21 auszuschließen, ist die Schneidplatte 11 mit einer Markierung 34 versehen, die einer Markierung 35 des Plattensitzes 6 oder dem Plattensitz 6 selbst zugeordnet ist. Die Markierung 34 enthält bspw. mehrere Zifferngruppen 37, 38, 39. Bspw. entspricht die erste Zifferngruppe 37 einer Nummer XX des Werkzeugkörpers 2, die diesen individuelle charakterisiert. Es können alle Werkzeugkörper der betreffenden Werkzeugbauart mit einer individuellen Nummer XX versehen sein, die den Werkzeugkörper eindeutig kennzeichnet und von anderen Werkzeugkörpern unterscheidet.

Die zweite Zifferngruppe 38 ist bspw. eine den Plattensitz kennzeichnende Nummer. Im vorliegenden Beispiel weist der Profilfräser 1 insgesamt acht Plattensitze auf, so dass als zweite Zifferngruppe 38 eine Nummer zwischen 1 und 8 dienen kann.

Optional kann eine letzte Zifferngruppe 39 die Nummer des Schneidplattensatzes wiedergeben, zu dem die betreffende Schneidplatte 11 gehört. Auf diese Weise kann sichergestellt werden, dass nur zu ein und demselben Schneidplattensatz gehörige Schneidplatten an dem Werkzeugkörper 2 montiert werden.

Der Werkzeugkörper 2 ist an oder bei seinem Plattensitz 6 sowie den anderen Plattensitzen mit der Markierung 35 versehen, die wenigstens die Nummer XX des Werkzeugkörpers als Zifferngruppe 37' und die Nummer YY des Plattensitzes als Zifferngruppe 38' wiedergibt.

Zusätzlich kann eine Ziffer oder Zifferngruppe PP auf den Schneidplatten 11 bis 14 sowie bis 14a angebracht sein, die der Kennzeichnung des Profils, d.h. der von den Schneidplatten festgelegten Schneidenform dient. Dadurch kann ein und derselbe Werkzeugkörper 2 durch Bestückung mit unterschiedlichen Schneidplatten unterschiedliche Profile erzeugen.

Die Herstellung und Verwendung des Profilfräsers 1 erfolgt folgendermaßen:

In der Herstellung werden die Werkzeugkörper 2 an ihren jeweiligen Plattensitzen zunächst mit Individualkennziffern XX und mit Nummern YY versehen. Die den Werkzeugkörper kennzeichnenden Ziffern XX können an jedem Plattensitz oder an einer einzigen anderen Stelle angeordnet werden. Bspw. werden sie eingraviert. Dem Werkzeugkörper 2 werden aus Schneidplattenrohlingen zusammengestellte Schneidplattenrohlingssätze zugeordnet, die jeweils für jeden Plattensitz 6, 7, 8, 9 eine Schneidplatte 11, 12, 13, 14 noch in Form eines Rohlings umfassen. Jeder Schneidplattenrohling wird dann mit einer Markierung 34 versehen, die als Zifferngruppe XX die Nummer des Werkzeugkörpers, als Zifferngruppe YY den individuellen Plattensitz und als Zifferngruppe ZZ die Nummer des Schneidplattensatzes wiedergibt, zu dem sie gehört.

Nach Montage jedes Schneidplattenrohlings an dem jeweiligen ihm zugeordneten Plattensitz wird der Werkzeugkörper von einer Präzisionsschleifmaschine aufgenommen und es werden die Schneidkanten 21, 22, 23, 24 sowie die entsprechenden Schneidkanten 21a, 22a, 23a, 24a form- und lagegenau festgelegt, indem die entsprechenden Flächen der SchneidDiatten 11, 12, 13, 14 (11a, 12a, 13a, 14a) an ihren entsprechenden Flächen geschliffen werden. Die Schneidplatten 11, 12, 13, 14 werden dazu bspw. an ihren Freiflächen und bedarfsweise auch an ihren Spanflächen geschliffen. Nach dem Schleifvorgang liegen die Schleifkanten des Profilfräsers 1 mit der erforderlichen Genauigkeit fest. Es werden nun die Schneidplatten 11, 12, 13, 14 sowie 11a 12a, 13a, 14a wieder entfernt und die Schneidplatten des nächsten Schneidplattensatzes werden montiert. Diese sind zuvor wiederum mit einer entsprechenden Markierung versehen worden.

Auf diese Weise werden nach und nach alle Schneidplattensätze an dem Werkzeugkörper 2 montiert und präzisionsgeschliffen sowie wieder von dem Werkzeugkörper 2 entfernt. Nach dem Schleifen werden die Schneidplatten 11 bis 14a der einzelnen Schneidplattensätze einer weiteren Behandlung zugeführt. Dies kann bspw. das gezielte Verrunden der Schneidkanten und/oder die Beschichtung der Schneidplatten mit einer Hartstoffschicht sein. Die Hartstoffschicht ist bspw. wenige µm dick, so dass eine durch die Schleifbearbeitung erreichte Genauigkeit von bspw. ± 1/100 mm nicht im geringsten beeinträchtigt wird. Nach Beendigung aller Nachbearbeitungsvorgänge an den Schneidplatten wird der Werkzeugkörper 2 mit den Schneidplattensätzen ausgeliefert. Ein erster Schneidplattensatz kann bereits montiert sein.

Der Profilfräser 1 kann sofort zu Präzisionsbearbeitungen, bspw. zum Schlichtfräsen entsprechend geformter Nuten, eingesetzt werden. Sind die Schneidplatten 11 bis 14a verschlissen, werden einfach die Schneidplatten des nächsten Schneidplattensatzes montiert, wobei jeweils Schneidplatten mit den Zifferngruppen XX, YY an den Plattensitzen montiert werden, die die gleiche Zifferngruppe XX, YY tragen. Auf diese Weise wird bei der Schneidplattenmontage die durch das Feinschleifen hergestellte Genauigkeit hinsichtlich der Position und Form der Schneidkanten reproduziert.

Ein Zerspanungswerkzeug (Form- oder Profilfraser) 1 weist einen Werkzeugkörper 2 mit Plattensitzen 6, 7, 8, 9 auf, denen Schneidplatten 11, 12, 13, 14 fest und individuell zugeordnet sind. Die Schneidplatten 11, 12, 13, 14 gehören zu einem Schneidplattensatz. Zu dem Zerspanungswerkzeug 1 gehören weitere Schneidplattensätze mit ebenfalls den Plattensitzen 6, 7, 8, 9 individuell zugeordneten Schneidplatten 11, 12, 13, 14. Um sicherzustellen, dass jede Schneidplatte 11, 12, 13, 14 jeweils auf den Plattensitz 6, 6a, 7, 7a, 8, 8a, 9, 9a montiert wird, auf dem sie geschliffen worden ist, sind sowohl die Plattensitze 6, 7, 8, 9, 6a, 7a, 8a, 9a als auch die Schneidplatten 11a bis 14a mit Markierungen 34, 35 versehen, die eine eindeutige unverwechselbare Zuordnung gestatten.

## Patentansprüche

1. Zerspanungswerkzeug (1), insbesondere für Präzisionsbearbeitungen,
mit einem Werkzeugkörper (2), an dem mehrere Plattensitze (6, 7, 8, 9) ausgebildet sind,
mit mehreren Schneidplatten (11, 12, 13, 14), die jeweils wenigstens eine Schneidkante (21, 22, 23, 24) aufweisen und die dazu eingerichtet sind, jeweils an dem Werkzeugkörper (2) in einem Plattensitz (6, 7, 8, 9) befestigt zu werden,
mit einem lösbaren Befestigungsmittel (15, 16, 17, 18) zur Befestigung der Schneidplatte (11, 12, 13, 14) an dem Plattensitz (6, 7, 8, 9)
**dadurch gekennzeichnet,**
**dass** jede Schneidplatte (11, 12, 13, 14) jeweils einem Plattensitz (6, 7, 8, 9) individuell zugeordnet ist, indem die Schneidplatten (11, 12, 13, 14) mit einem Schliff versehen sind, der in in den Werkzeugkörper (2) eingebautem Zustand an den Schneidplatten (11, 12, 13, 14) angebracht worden ist.

2. Zerspanungswerkzeug nach Anspruch 1, **dadurch gekennzeichnet, dass** jede Schneidplatte (11, 12, 13, 14) jeweils mit einer individuellen Markierung (34) versehen ist, die den Plattensitz (6, 7, 8, 9) kennzeichnet, dem die Schneidplatte (11, 12, 13, 14) zugeordnet ist.

3. Zerspanungswerkzeug nach Anspruch 1, **dadurch gekennzeichnet, dass** wenigstens einige Plattensitze (6, 7, 8, 9) untereinander gleich ausgebildet sind.

4. Zerspanungswerkzeug nach Anspruch 1, **dadurch gekennzeichnet, dass** die Schneidplatten (11, 12, 13, 14) jeweils mehrere Schneidkanten oder Schneidkantenbereiche aufweisen.

5. Zerspanungswerkzeug nach Anspruch 4, **dadurch gekennzeichnet, dass** sich die Schneidkanten (21, 22, 23, 24) der Schneidplatten (11, 12, 13, 14) zu wenigstens einer vollständigen Schneide mit Überlappungsbereichen insbesondere in Zahnspitzenbereichen überdecken.

6. Zerspanungswerkzeug nach Anspruch 1, **dadurch gekennzeichnet, dass** der Werkzeugkörper (2) zwei Reihen Plattensitze (6, 7, 8, 9; 6a, 7a, 8a, 9a) aufweist, deren Schneidplatten (11, 12, 13, 14; 11a, 12a, 13a, 14a) gegeneinander axial gegeneinander versetzt sind.

7. Zerspanungswerkzeug nach Anspruch 1, **dadurch gekennzeichnet, dass** jeder Plattensitz (6, 7, 8, 9) jeweils mit einer Markierung (35) versehen ist, die ihn von allen anderen Markierungen der anderen Plattensitze unterscheidet, und dass die an der Schneidplatte vorgesehene Markierung (34) auf die Markierung (35) des zugeordneten Plattensitzes bezogen ist.

8. Zerspanungswerkzeug nach Anspruch 1, **dadurch gekennzeichnet, dass** die Schneidplatten (11, 12, 13, 14) mit einer Zusatzmarkierung (PP) versehen sind, die die Schneidenform kennzeichnen.

9. Zerspanungswerkzeug nach Anspruch 1, **dadurch gekennzeichnet, dass** der Schliff an jeder Schneidplatte (11, 12, 13, 14) einen positiven Freiwinkel festlegt.

10. Zerspanungswerkzeug nach Anspruch 1, **dadurch gekennzeichnet, dass** die Schneidplatten (11, 12, 13, 14) mit einer Beschichtung versehen sind, die nach dem Schleifen der Schneidplatten (11, 12, 13, 14) auf diese aufgebracht worden ist.

11. Zerspanungswerkzeug nach Anspruch 10, **dadurch gekennzeichnet, dass** die Beschichtung in ausgebautem Zustand auf die Schneidplatten (11, 12, 13 , 14) aufgebracht worden ist.

12. Zerspanungswerkzeug nach Anspruch 12, **dadurch gekennzeichnet, dass** die Beschichtung eine PVD-, eine TiN- oder eine TiC-Beschichtung ist.

13. Zerspanungswerkzeug nach Anspruch 1, **dadurch gekennzeichnet, dass** die Schneidplatten (11, 12, 13, 14) an ihren Schneidkanten (21, 22, 23, 24) mit einer definierten Verrundung versehen sind.

14. Zerspanungswerkzeug nach Anspruch 1, **dadurch gekennzeichnet, dass** der Werkzeugkörper (2) und die Plattensitze (6, 7, 8, 9) so ausgebildet sind, dass die Scheidplatten (11, 12, 13, 14) in eingebautem Zustand einen Axialspanwinkel von im Wesentlichen Null aufweisen und dass die Scheidplatten (11, 12, 13, 14) vorzugsweise auf einer Schraubenlinie angeordnet sind.

15. Zerspanungswerkzeug nach Anspruch 1, **dadurch gekennzeichnet, dass** der Plattensitz (6, 7, 8, 9) eine plane Auflagefläche (27) und rechtwinklig zu ihr ausgerichtete Anlageflächen (28, 29) aufweist.

16. Zerspanungswerkzeug nach Anspruch 1, **dadurch gekennzeichnet, dass** dem Werkzeugkörper (2) mehrere vollständige Schneidplattensätze zugeordnet sind, wobei jeder Schneidplattensatz für jeden Plattensitz (6, 7, 8, 9) jeweils eine entsprechend gekennzeichnete Schneidplatte (11, 12, 13, 14) aufweist.

17. Zerspanungswerkzeug nach Anspruch 2, **dadurch gekennzeichnet, dass** jede Schneidplatte (11, 12, 13, 14) mit einer zusätzlichen Markierung (37) versehen ist, die den Werkzeugkörper (2) kennzeichnet, dem sie zugeordnet ist.

18. Verfahren zur Bereitstellung von Schneiplattenbestückten Präzisionswerkzeugen, insbesondere Fräswerkzeugen, mit den folgenden Verfahrenschritten:
Bereitstellen eines Werkzeugkörpers (2), an dem mehrere Plattensitze (6, 7, 8, 9) ausgebildet sind,
Bereitstellen wenigstens eines vollständigen Schneidplattensatzes, zu dem für jeden Plattensitz (6, 7, 8, 9) wenigstens eine Schneidplatte (11, 12, 13, 14) gehört,
Zuordnung jeder Schneidplatte (11, 12, 13, 14) zu jeweils einem Plattensitz (6, 7, 8, 9) und Montage der Schneidplatten (11, 12, 13, 14) an ihren Plattensitzen 6, 7, 8, 9),
Schleifen der Schneidplatten (11, 12, 13, 14) in eingebautem Zustand, zur definierten Ausbildung ihrer Schneidkanten (21, 22, 23, 24),
Trennen der Schneidplatten (11, 12, 13, 14) von ihren Plattensitzen (6, 7, 8, 9) und Nachbehandlung, und
Wiederbefestigung der Schneidplatten (11, 12, 13, 14) an den Plattensitzen (6, 7, 8, 9) gemäß der zuvor getroffenen Zuordnung.

19. Verfahren nach Anspruch 18, **dadurch gekennzeichnet, dass** die Schneidplatten (11, 12, 13, 14) mit einer Gravur versehen werden, die den Plattensitz (6, 7, 8, 9) kennzeichnet, dem die Schneidplatte (11, 12, 13, 14) zugeordnet ist.

20. Verfahren nach Anspruch 19, **dadurch gekennzeichnet, dass** jeder Plattensitz (6, 7, 8, 9) des Werkzeugkörpers (2) mit einer Markierung (35) versehen wird, die sich von den Markierungen (35) anderer Plattensitze (6, 7, 8, 9) unterscheidet.

21. Verfahren nach Anspruch 19, **dadurch gekennzeichnet, dass** jede Schneidplatte (11, 12, 13, 14) des Schneidplattensatzes mit einer Markierung (37) versehen wird, die den Werkzeugkörper bezeichnet, zu dem der Schneidplattensatz gehört.

22. Verfahren nach Anspruch 21, **dadurch gekennzeichnet, dass** jeder Werkzeugkörper (2) mit einer ihn individualisierenden Markierung (37') versehen ist.

23. Verfahren nach Ansprüche 18, **dadurch gekennzeichnet, dass** jedem Werkzeugkörper (2) mehrere Schneidplattensätze zugeordnet werden.

24. Verwendung eines mit auswechselbaren Schneidplatten (11 bis 14a) bestückten Fräswerkzeugs (1) nach Anspruch 1 zur Schlichtbearbeitung.

## Claims

1. Milling cutter (1), in particular for precision machining operations,
with a tool body (2), on which several blade seats (6, 7, 8, 9) are constructed,
with several cutting blades (11, 12, 13, 14), which respectively have at least one cutting edge (21, 22, 23, 24) and which are fitted to be respectively fastened to the tool body (2) in a blade seat (6, 7, 8, 9),
with a detachable fastening means (15, 16, 17, 18) for fastening the cutting blade (11, 12, 13, 14) to the blade seat (6, 7, 8, 9),
**characterised in that**
each cutting blade (11, 12, 13, 14) is individually assigned to a respective blade seat (6, 7, 8, 9) by providing the cutting blades (11, 12, 13, 14) with a ground section, which is provided to the cutting blades (11, 12, 13, 14) when installed into the tool body (2).

2. Milling cutter according to Claim 1, **characterised in that** each cutting blade (11, 12, 13, 14) is respectively provided with an individual marking (34), which identifies the blade seat (6, 7, 8, 9) to which the cutting blade (11, 12, 13, 14) is assigned.

3. Milling cutter according to Claim 1, **characterised in that** at least some blade seats (6, 7, 8, 9) are configured the same.

4. Milling cutter according to Claim 1, **characterised in that** the cutting blades (11, 12, 13, 14) respectively have several cutting edges or cutting edge regions.

5. Milling cutter according to Claim 4, **characterised in that** the cutting edges (21, 22, 23, 24) of the cutting blades (11, 12, 13, 14) overlap to at least a full blade with overlapping regions in particular in the tooth tip regions.

6. Milling cutter according to Claim 1, **characterised in that** the tool body (2) has two rows of blade seats (6, 7, 8, 9; 6a, 7a, 8a, 9a), their cutting blades (11, 12, 13, 14; 11a 12a, 13a, 14a) being staggered axially in relation to one another.

7. Milling cutter according to Claim 1, **characterised in that** each blade seat (6, 7, 8, 9) is respectively provided with a marking (35), which distinguishes it from all the other markings of the other blade seats, and that the marking (34) provided on the cutting blade is related to the marking (35) of the assigned blade seat.

8. Milling cutter according to Claim 1, **characterised in that** the cutting blades (11, 12, 13, 14) are provided with an additional marking(PP) these identifying the blade form.

9. Milling cutter according to Claim 1, **characterised in that** the ground section on each cutting blade (11, 12, 13, 14) determines a positive clearance angle.

10. Milling cutter according to Claim 1, **characterised in that** the cutting blades (11, 12, 13, 14) are provided with a coating, which was applied thereto after grinding of the cutting blades (11, 12, 13, 14).

11. Milling cutter according to Claim 10, **characterised in that** the coating was applied to the cutting blades (11, 12, 13, 14) in the disassembled state.

12. Milling cutter according to Claim 11, **characterised in that** the coating is a PVDC fibre, TiN or TiC coating.

13. Milling cutter according to Claim 1, **characterised in that** the cutting blades (11, 12, 13, 14) are provided with a defined rounded section on their cutting edges (21, 22, 23, 24).

14. Milling cutter according to Claim 1, **characterised in that** the tool body (2) and the blade seats (6, 7, 8, 9) are configured such that when installed, the cutting blades (11, 12, 13, 14) have an axial rake angle of essentially zero, and that the cutting blades (11, 12, 13, 14) are preferably arranged on a helical line.

15. Milling cutter according to Claim 1, **characterised in that** the blade seat (6, 7, 8, 9) has a plane supporting surface (27) and abutment surfaces (28, 29) oriented at right angles thereto.

16. Milling cutter according to Claim 1, **characterised in that** several complete cutting blade sets are assigned to the tool body (2), each cutting blade set respectively having an appropriately identified cutting blade (11, 12, 13, 14) for each blade seat (6, 7, 8, 9).

17. Milling cutter according to Claim 2, **characterised in that** each cutting blade (11, 12, 13, 14) is provided with an additional marking (37), which identifies the tool body (2), to which it is assigned.

18. Process for the preparation of precision tools fitted with cutting blades, in particular milling cutters, with the following process steps:
preparation of a tool body (2), on which several blade seats (6, 7, 8, 9) are constructed;
preparation of at least one complete cutting blade set, to which at least one cutting blade (11, 12, 13, 14) for each blade seat (6, 7, 8, 9) belongs;
assignment of each cutting blade (11, 12, 13, 14) to a respective blade seat (6, 7, 8, 9) and mounting of the cutting blades (11, 12, 13, 14) on their blade seats (6, 7, 8, 9);
grinding of the cutting blades (11, 12, 13, 14) when installed to the defined configuration of their cutting edges (21, 22, 23, 24);
separation of the cutting blades (11, 12, 13, 14) from their blade seats (6, 7, 8, 9) and subsequent treatment, and
refastening of the cutting blades (11, 12, 13, 14) to the blade seats (6, 7, 8, 9) in accordance with the previously made assignment.

19. Process according to Claim 18, **characterised in that** the cutting blades (11, 12, 13, 14) are provided with an engraving, which identifies the blade seat (6, 7, 8, 9), to which the cutting blade (11, 12, 13, 14) is assigned.

20. Process according to Claim 19, **characterised in that** each blade seat (6, 7, 8, 9) of the tool body (2) is provided with a marking (35), which differs from the markings (35) of other blade seats (6, 7, 8, 9).

21. Process according to Claim 19, **characterised in that** each cutting blade (11, 12, 13, 14) of the cutting blade set is provided with a marking (37), which designates the tool body, to which the cutting blade set belongs.

22. Process according to Claim 21, **characterised in that** each tool body (2) is provided with its own individual marking (37').

23. Process according to Claim 18, **characterised in that** several cutting blade sets are assigned to each tool body (2).

24. Use of a milling cutter (1) fitted with replaceable cutting blades (11 to 14a) according to Claim 1 for finishing work.

## Revendications

1. Outil à enlèvement de copeaux (1), en particulier pour des usinages de précision,
avec un corps d'outil (2), sur lequel sont aménagées plusieurs logements de plaquette (6, 7, 8, 9),
avec plusieurs plaquettes de coupe (11, 12, 13, 14) qui présentent chacune au moins une arête de coupe (21, 22, 23, 24) et sont agencées chacune de manière à pouvoir être fixées sur le corps d'outil (2), dans un logement de plaquette (6, 7, 8, 9),
avec un moyen de fixation (15, 16, 17, 18) démontable, pour fixer la plaquette de coupe (11, 12, 13, 14) au logement de plaquette (6, 7, 8, 9),
**caractérisé**
**en ce qu'**à chaque plaquette de coupe (11, 12, 13, 14) est associé individuellement un logement de plaquette (6, 7, 8, 9), les plaquettes de coupe (11, 12, 13, 14) présentant un affûtage qui est réalisé sur les plaquettes de coupe (11, 12, 13, 14) à l'état monté dans le corps d'outil ((2).

2. Outil à enlèvement de copeaux selon la revendication 1, **caractérisé en ce que** chaque plaquette de coupe (11, 12, 13, 14) est pourvue d'un marquage (34) individuel, qui désigne le logement de plaquette (6, 7, 8, 9) auquel la plaquette de coupe (11, 12, 13, 14) est associée.

3. Outil à enlèvement de copeaux selon la revendication 1, **caractérisé en ce qu'**au moins quelques logements de plaquette (6, 7, 8, 9) présentent une conformation identique.

4. Outil à enlèvement de copeaux selon la revendication 1, **caractérisé en ce que** les plaquettes de coupe (11, 12, 13, 14) comportent chacune plusieurs arêtes de coupe ou zone d'arête de coupe.

5. Outil à enlèvement de copeaux selon la revendication 4, **caractérisé en ce que** les arêtes de coupe (21, 22, 23, 24) des plaquettes de coupe (11, 12, 13, 14) se chevauchent avec une zone de recouvrement, en particulier dans des régions d'extrémité de dent, pour former une arête continue.

6. Outil à enlèvement de copeaux selon la revendication 1, **caractérisé en ce que** le corps d'outil (2) présente deux rangées de logements de plaquettes (6, 7, 8, 9; 6a, 7a, 8a, 9a) dont les plaquettes de coupe (11, 12, 13, 14; 11a, 12a, 13a, 14a) sont mutuellement décalées dans la direction axiale.

7. Outil à enlèvement de copeaux selon la revendication 1, **caractérisé en ce que** chaque logement de plaquettes (6, 7, 8, 9) est pourvu d'un marquage (35), qui le distingue de tous les autres marquages des autres logements de plaquettes et **en ce que** le marquage (4) prévu sur la plaquette de coupe fait référence au marquage (35) du logement de plaquette concerné.

8. Outil à enlèvement de copeaux selon la revendication 1, **caractérisé en ce que** les plaquettes de coupe (11, 12, 13, 14) sont pourvues d'un marquage (PP) supplémentaire qui caractérise la forme du taillant.

9. Outil à enlèvement de copeaux selon la revendication 1, **caractérisé en ce que** l'affûtage sur chaque plaquette de coupe (11, 12, 13, 14) donne une dépouille positive.

10. Outil à enlèvement de copeaux selon la revendication 1, **caractérisé en ce que** les plaquettes de coupe (11, 12, 13, 14) sont pourvues d'un revêtement, qui est appliqué sur lesdites plaquettes de coupe (11, 12, 13, 14) après le meulage.

11. Outil à enlèvement de copeaux selon la revendication 10, **caractérisé en ce que** le revêtement est appliqué sur les plaquettes de coupe (11, 12, 13, 14) à l'état non monté.

12. Outil à enlèvement de copeaux selon la revendication 11, **caractérisé en ce que** le revêtement est un revêtement PVD, un revêtement TiN ou un revêtement TiC.

13. Outil à enlèvement de copeaux selon la revendication 1, **caractérisé en ce que** les plaquettes de coupe (11, 12, 13, 14), sur leurs arêtes de coupe (21, 22, 23, 24) sont pourvues d'un arrondi défini.

14. Outil à enlèvement de copeaux selon la revendication 1, **caractérisé en ce que** le corps d'outil (2) et les logements de plaquettes (6, 7, 8, 9) sont agencés de telle sorte que les plaquettes de coupe (11, 12, 13, 14) à l'état monté présentent un angle de coupe axial essentiellement nul et **en ce que** les plaquettes de coupe (11, 12, 13, 14), de préférence, sont disposées sur une hélice.

15. Outil à enlèvement de copeaux selon la revendication 1, **caractérisé en ce que** le logement de plaquettes (6, 7, 8, 9) présente une surface de support (27) plane et des surfaces d'appui (28, 29) disposées perpendiculairement à celle-ci.

16. Outil à enlèvement de copeaux selon la revendication 1, **caractérisé en ce qu'**au corps d'outil (2) sont associés plusieurs jeux complets de plaquettes de coupe, chaque jeu de plaquettes de coupe comprenant à chaque fois pour chaque logement de plaquette (6, 7, 8, 9), une plaquette de coupe (11, 12, 13, 14) repérée en conséquence.

17. Outil à enlèvement de copeaux selon la revendication 2, **caractérisé en ce que** chaque plaquette de coupe (11, 12, 13, 14) est pourvue d'un marquage supplémentaire (37) qui désigne le corps d'outil (2) auquel elle est associée.

18. Procédé de fabrication d'outils de précision à plaquettes de coupe amovibles, en particulier d'outils de fraisage, comprenant les étapes suivantes:
fabrication d'un corps d'outil (2), sur lequel sont aménagés plusieurs logements de plaquettes (6, 7, 8, 9),
fabrication d'au moins un jeu complet de plaquettes de coupe, avec au moins une plaquette de coupe (11, 12, 13, 14) pour chaque logement de plaquette (6, 7, 8, 9),
affectation de chaque plaquette de coupe (11, 12, 13, 14) à un logement de plaquette (6, 7, 8, 9) et montage des plaquettes de coupe (11, 12, 13, 14) dans leur logement de plaquette (6, 7, 8, 9),
affûtage des plaquettes de coupe (11, 12, 13, 14) à l'état monté, pour former de manière ciblée leurs arêtes de coupe (21, 22, 23, 24),
démontage des plaquettes de coupe (11, 12, 13, 14) de leurs logements de plaquette (6, 7, 8, 9) et traitement et
remontage des plaquettes de coupe (11, 12, 13, 14) dans les logements de plaquette (6, 7, 8, 9) conformément à l'affectation établie précédemment.

19. Procédé selon la revendication 18, **caractérisé en ce que** les plaquettes de coupe (11, 12, 13, 14) sont pourvues d'un gravage, qui indique le logement de plaquette (6, 7, 8, 9) auquel la est associée.

20. Procédé selon la revendication 19, **caractérisé en ce que** chaque logement de plaquette (6, 7, 8, 9) du corps d'outil (2) est pourvu d'un marquage (35), qui diffère du marquage (35) des autres logements de plaquette (6, 7, 8, 9).

21. Procédé selon la revendication 19, **caractérisé en ce que** chaque plaquette de coupe (11, 12, 13, 14) du jeu de plaquettes de coupe est pourvue d'un marquage (37), qui indique le corps d'outil (2) auquel appartient le jeu de plaquettes de coupe

22. Procédé selon la revendication 21, **caractérisé en ce que** chaque corps d'outil (2) est pourvu d'un marquage (37') individuel.

23. Procédé selon la revendication 18, **caractérisé en ce que** chaque corps d'outil (2) est associé à plusieurs jeux de plaquettes de coupe.

24. Utilisation d'un de fraisage (1) muni de plaquettes de coupe (11 à 14a) remplaçables selon la revendication 1, pour l'usinage fin.
